# EUROPEAN PATENT APPLICATION

(11) **EP 2 293 364 A1**
(43) Date of publication of application: **09.03.2011**
(21) Application number: 08751607.6
(22) Date of filing: 25.04.2008
(51) Int. Cl.: H01M 2/12

(54) **LEAD STORAGE BATTERY**

(71) Applicant: Panasonic Corporation, Kadoma-shi Osaka 571-8501 (JP)
(72) Inventor: Seiji Anzai, Osaka 540-6207 (JP); Kazunari Ando, Osaka 540-6207 (JP)
(74) Representative: Grünecker, Kinkeldey, Stockmair & Schwanhäusser Anwaltssozietät
(86) International application number: PCT/JP2008/001082
(87) International publication number: WO 2009/130740

(57) **Abstract**

A lead storage battery including a cell, a cell chamber, and a gas exhaust unit. The gas exhaust unit includes a small chamber provided in a battery lid and including a first exhaust path having an opening at the cell chamber side, a covering body mounted on a bottom wall of the small chamber to cover the opening of the first exhaust path, a drop-off prevention member provided in an upper part of the small chamber and including a second exhaust path, a gap formed in at least a part between the bottom wall of a periphery of the opening and the covering body, and space for allowing movement of the covering body between the covering body and the drop-off prevention member in the small chamber. The gas is exhausted to an outside via the first exhaust path, the gap and the second exhaust path.

## Description

### TECHNICAL FIELD

The present invention relates to a lead storage battery, and more particularly to a vent-type lead storage battery.

### BACKGROUND ART

In general, lead storage batteries for starting vehicles are mainly so-called vent-type lead storage batteries. In the lead storage battery of this type, entire electrode plates of a positive electrode and a negative electrode are immersed in an electrolytic solution of dilute sulfuric acid, and a vent plug having an exhaust port for exhausting oxygen gas and hydrogen gas generated inside the battery to the outside of the battery is placed in a battery lid.

On the other hand, some of batteries for vehicles employ also a negative electrode absorption type valve-regulated lead storage battery in which a negative electrode plate exposed from an electrolytic solution is allowed to absorb oxygen gas generated inside the battery. In the valve-regulated lead storage battery, the negative electrode plate absorbs oxygen gas generated from the positive electrode plate at the time of charge, and thereby generation of hydrogen from the negative electrode plate is suppressed so as to suppress the reduction of water in the electrolytic solution by the electrolysis of water. Thus, since the valve-regulated lead storage battery does not basically need water supply to the electrolytic solution, it has an excellent maintenance property. However, since it has a structure in which the negative electrode plate is exposed from the electrolytic solution, the amount of the electrolytic solution is limited as compared with a vent-type lead storage battery, resulting in the reduction of the battery capacity.

On the other hand, in a vent-type lead storage battery, since entire electrode plates of a positive electrode and a negative electrode are immersed in an electrolytic solution, the amount of the electrolytic solution around the electrode plates is larger than that of the valve-regulated lead storage battery. As a result, the vent-type lead storage battery is advantageous in the improvement of the battery capacity.

Furthermore, an absorbing reaction of oxygen gas by a negative electrode as in a valve-regulated lead storage battery is not carried out in the structure of a vent-type lead storage battery. Therefore, hydrogen gas generated on the negative electrode plate is exhausted together with oxygen gas generated on a positive electrode plate to the outside of the battery via an exhaust port. Furthermore, the reduction of water due to the exhaust from the exhaust port proceeds not only by the above-mentioned electrolysis but also by evaporation. In particular, since a lead storage battery for starting a vehicle is installed in a high temperature engine room, the reduction of an electrolytic solution due to evaporation of water tends to proceed.

Furthermore, the reduction of an electrolytic solution also proceeds because of fluctuation of the surface of the electrolytic solution by acceleration, vibration, and the like, while a vehicle is moving, or because electrolytic solution mist is generated by degassing of oxygen gas and hydrogen gas generated at the time of charge from the surface of the electrolytic solution and the mist is exhausted to the outside from the battery via the exhaust port.

In order to suppress the reduction of an electrolytic solution due to the evaporation of water or the exhaust of electrolytic solution mist, an example is disclosed, in which a porous body is disposed between the inside of the battery and an exhaust port of a vent plug, and a pressure loss value with the porous body and hole diameter distribution of the porous body are defined (see, for example, Patent Document 1).

According to Patent Document 1, the porous body suppresses replacement between the air much containing water evaporated inside the battery and the atmosphere outside the battery. Furthermore, Patent Document 1 also shows that the reduction of an electrolytic solution is suppressed by condensing electrolytic solution mist in a porous body and refluxing the condensed mist as an electrolytic solution into the inside of the battery.

However, since an exhaust path is always provided between the inside and outside of a battery, when, in particular, the battery is stored or used in an atmospheric temperature of more than 40°C, the reduction amount of an electrolytic solution in a vent-type lead storage battery is larger than that of a valve-regulated lead storage battery.

Furthermore, a configuration in which an entire cell including both electrode plates of a positive electrode and a negative electrode is immersed into an electrolytic solution, and, in this state, each cell chamber is closed by a valve is disclosed (see, for example, Patent Document 2).

That is to say, the lead storage battery of Patent Document 2 has a configuration in which when an internal pressure of the battery is increased by oxygen gas and hydrogen gas generated inside the battery, the valve is opened by a predetermined pressure and gases remaining in the cell chamber of the battery are released to the outside of the battery, and then the valve is closed again. Thus, the reduction of an electrolytic solution due to the electrolysis of water is substantially the same as that of an ordinary vent-type lead storage battery. Furthermore, since the valve is not always opened, while the valve is closed, the evaporation of water in the electrolytic solution and the exhaust of the electrolytic solution mist to the outside of the battery are suppressed by the valve. Thus, the reduction of the electrolytic solution can be reduced.

However, in the configuration of the lead storage battery of Patent Document 2, since the valve is opened according to the increase in the internal pressure of the cell chamber of the battery, the internal pressure of the cell chamber of the battery is increased to at least a valve opening pressure. Therefore, when valve opening pressures of valves in respective cell chambers cannot be set uniformly, partitions that define the cell chambers may be deformed by the difference in the internal pressure from the adjacent cell chamber. This makes the positions of the electrolytic solution surfaces vary among cell chambers. With the variations, in a cell chamber in which the electrolytic solution surface is raised, the electrolytic solution tends to overflow from the battery. Meanwhile, in a cell chamber in which the electrolytic solution surface is lowered, a strap may be exposed from the electrolytic solution surface and the strap may be corroded.

Hereinafter, problems of the lead storage battery described in Patent Document 2 are specifically described. In the lead storage battery described in Patent Document 2, for example, by variations of dimension accuracy of a valve body and a valve cylinder on which the valve body is placed or variations of the modulus of elasticity of the valve body, and the like, a valve opening pressure and a valve closing pressure of a control valve tend to vary largely, thus causing a difference in the internal pressure among the cell chambers. As a result, the partition is deformed to the side of the cell chamber whose internal pressure is low, and volumes change among adjacent cell chambers. Thus, the electrolytic solution surfaces may vary.

For example, when a vehicle is driven for a predetermined period of time in a state in which a vehicle battery including a cell chamber having a high valve opening pressure and a cell chamber having a low valve opening pressure adjacent to each other is installed, gases generated by charge and discharge remain in cell chambers. The gases are released to the outside of the battery when the internal pressure reaches a valve opening pressure; and the valve is closed when the internal pressure is reduced to a valve closing pressure in each cell chamber.

At this time, when the difference in the valve opening pressure of the control valve occurs by variations of component materials as mentioned above, in the adjacent cell chambers, i n a cell chamber having a low valve opening pressure, the valve is opened at a lower internal pressure than in a cell chamber having a high valve opening pressure. Thus, the difference in the internal pressures occurs among the adjacent cell chambers. With this difference in the internal pressure, the partition is deformed such that it is largely swelled toward the side of the cell chamber having a low internal pressure. If the use of the battery is stopped in such a deformation state, plastic deformation occurs in the partition. As a result, even if the difference in the internal pressure between the cell chambers is solved, the deformation of the partition is not returned to the original shape.

Furthermore, the plastic deformed partition makes volumes of the cell chambers largely vary. As a result, the positions of the electrolytic solution surface largely vary among the cell chambers. That is to say, in the cell chamber that has a high valve opening pressure and therefore has swelled by the difference in the internal pressure, the volume of the cell chamber is increased and the height of the electrolytic solution surface is largely reduced. On the contrary, in the cell chamber in which the valve opening pressure is low and therefore the valve has already been opened and the internal pressure has been reduced, the volume of the cell chamber is reduced and the height of the electrolytic solution surface is raised.

When the electrolytic solution surface is raised, the electrolytic solution tends to overflow from the battery due to vibration and the like. Furthermore, when the electrolytic solution surface is lowered, so that a strap is exposed from the electrolytic solution, disconnection may occur by corrosion of the strap.
[Patent Document 1] Japanese Patent Application Unexamined Publication No. H7-220706
[Patent Document 2] Japanese Patent Application Unexamined Publication No. 2003-142148

### SUMMARY OF THE INVENTION

The present invention relates to a lead storage battery including a cell including a positive electrode plate and a negative electrode plate; a cell chamber accommodating the cell in a state in which electrode plate surfaces of the positive electrode plate and the negative electrode plate are immersed in an electrolytic solution; and a gas exhaust unit for exhausting a gas generated on the positive electrode plate and the negative electrode plate. The gas exhaust unit includes a small chamber provided in a battery lid and including a first exhaust path having an opening at the cell chamber side, a covering body mounted on a bottom wall of the small chamber to cover the opening of the first exhaust path, a drop-off prevention member provided in an upper part of the small chamber and including a second exhaust path, a gap formed in at least a part between the bottom wall of a periphery of the opening and the covering body, and space for allowing movement of the covering body between the covering body and the drop-off prevention member in the small chamber. The gas is exhausted to an outside via the first exhaust path, the gap and the second exhaust path.

This can suppress the reduction of the electrolytic solution, and suppress the deformation of the partition due to variations of valve opening pressure and variations of the position of the electrolytic solution surface caused by the deformation. As a result, it is possible to achieve a lead storage battery having excellent reliability in which the occurrence of leakage of an electrolytic solution or corrosion of a strap and the like can be prevented in advance.

### BRIEF DESCRIPTION OF THE DRAWINGS

Fig. 1 is a view showing a cross section of a principal part of a lead storage battery in accordance with a first exemplary embodiment of the present invention.
Fig. 2 is an enlarged view showing a cross section of a principal part of the lead storage battery in accordance with the first exemplary embodiment of the present invention.
Fig. 3 is an enlarged view showing a cross section of a principal part of another lead storage battery in accordance with the first exemplary embodiment of the present invention.
Fig. 4 is a view showing a cross section of a principal part of a lead storage battery in accordance with a second exemplary embodiment of the present invention.
Fig. 5 is an enlarged view showing a cross section of a principal part of the lead storage battery in accordance with the second exemplary embodiment of the present invention.
Fig. 6 is an enlarged view showing a cross section of a principal part of another lead storage battery in accordance with the second exemplary embodiment of the present invention.
Fig. 7 is an exploded sectional view showing a configuration of a gas exhaust unit in accordance with a third exemplary embodiment of the present invention.
Fig. 8 is a sectional view showing a gas exhaust unit in accordance with the third exemplary embodiment of the present invention.
Fig. 9 is a view showing a cross section of a principal part of a lead storage battery in accordance with one Comparative Example.
Fig. 10 is a view showing a cross section of a principal part of a lead storage battery in accordance with another Comparative Example.

### REFERENCE MARKS IN THE DRAWINGS

- 1: lead storage battery
- 2: positive electrode plate
- 3: separator
- 4: negative electrode plate
- 5: cell
- 6: electrolyzer
- 7: partition
- 8: cell chamber
- 9: electrolytic solution
- 10, 28, 32: lid (battery lid)
- 10a, 32a: liquid injection port
- 11: strap
- 12, 12A: gas exhaust unit
- 13: first exhaust path
- 13a,: 13b opening
- 14: small chamber
- 15: bottom wall
- 15a: groove portion
- 16: covering body
- 17: second exhaust path
- 18: gap
- 19: drop-off prevention member
- 20: first protrusion
- 21: second protrusion
- 22: lead storage battery
- 23, 33: vent plug
- 23a: top part
- 23b: cylinder portion
- 24: small chamber body
- 25: side wall
- 26: filter
- 27: splash-proof body
- 29: valve cylinder
- 30: cap-shaped valve body
- 31: valve holding plate

### DETAILED DESCRIPTION OF THE PREFERRED EMBODIMENT

Hereinafter, a lead storage battery (hereinafter, also referred to as "battery") in accordance with exemplary embodiments of the present invention is described with reference to drawings.

### (FIRST EXEMPLARY EMBODIMENT)

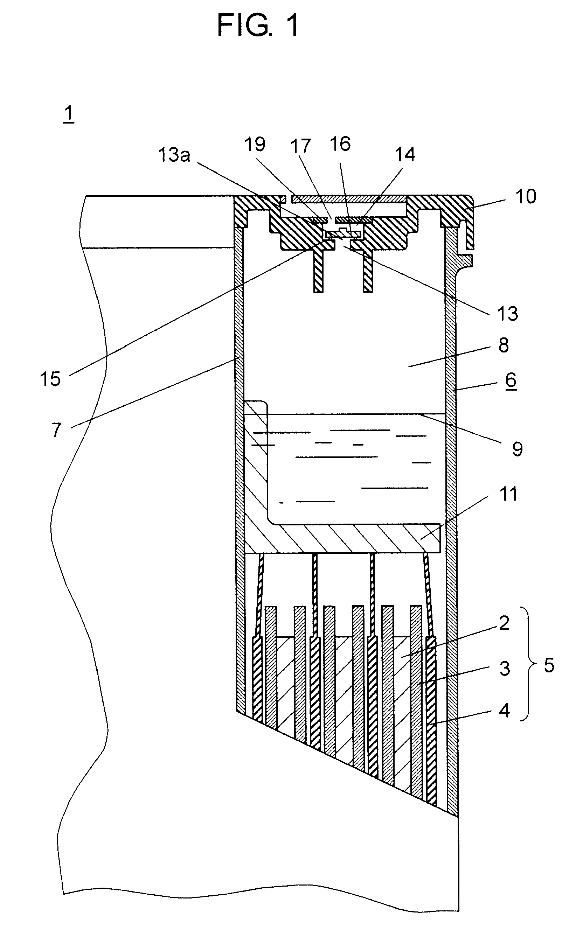

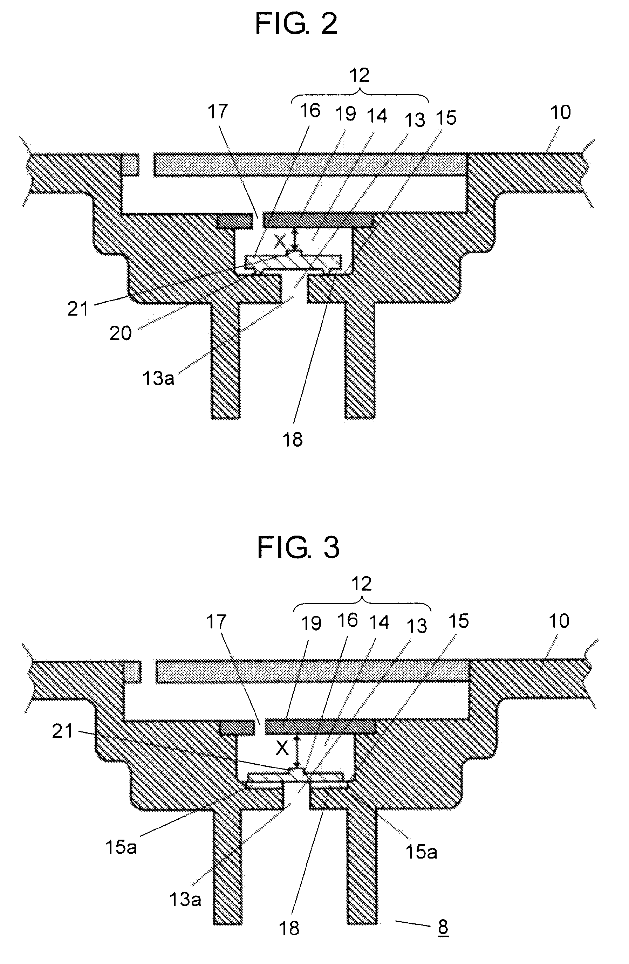

Fig. 1 is a view showing a cross section of a principal part of a lead storage battery in accordance with a first exemplary embodiment of the present invention. Fig. 2 is an enlarged view showing a cross section of a principal part of the lead storage battery in accordance with the first exemplary embodiment of the present invention.

As shown in Fig. 1, similar to a conventional vent-type lead storage battery, lead storage battery 1 of the present invention has a configuration in which cell 5 including positive electrode plate 2, separator 3 and negative electrode plate 4 is accommodated together with electrolytic solution 9 in cell chamber 8 divided by partition 7 of electrolyzer 6, and a top part of electrolyzer 6 is closed by battery lid (hereinafter, referred to as "lid") 10 having a gas exhaust unit. At this time, a position of the liquid surface of electrolytic solution 9 is generally set above the upper surface of strap 11 connecting the electrode plates having the same polarities of positive electrode plate 2 and negative electrode plate 4. Herein, strap 11 is made of, for example, Pb alloy such as Pb-Sb alloy and Pb-Sn alloy. Thus, when strap 11 is exposed from electrolytic solution 9, the exposed surface of strap 11 is brought into contact with a sulfuric acid part in electrolytic solution 9 and oxygen gas in the air simultaneously, and thereby the sulfuric acid part is consumed on the surface of strap 11 and the surface becomes neutral to alkaline so as to prevent the corrosion of Pb alloy from promoting. Therefore, it is preferable that strap 11 and entire surfaces of the electrode plates of positive electrode plate 2 and negative electrode plate 4 are accommodated in a state in which they are immersed in electrolytic solution 9.

) Hereinafter, gas exhaust unit 12 provided in lid 10 is described in detail with reference to Figs. 1 and 2.

As shown in Fig. 2, gas exhaust unit 12 includes small chamber 14 having at least bottom wall 15, drop-off prevention member 19 provided in the upper part of small chamber 14, and covering body 16 accommodated in small chamber 14. Bottom wall 15 of small chamber 14 has opening 13a as first exhaust path 13 at cell chamber 8 side. Drop-off prevention member 19 has a through hole as second exhaust path 17. Furthermore, covering body 16 is mounted so as to cover opening 13a of small chamber 14, and prevented from dropping off from the inside of small chamber 14 by drop-off prevention member 19. At this time, in order to form gap 18, first protrusions 20 are discretely provided on covering body 16 on the side that faces bottom wall 15 in at least a part between bottom wall 15 in the periphery of opening 13a and covering body 16, and second protrusions 21 are provided on covering body 16 on the side facing drop-off prevention member 19. Furthermore, small chamber 14 has space with, for example, distance x shown in Fig. 2 between drop-off prevention member 19 and second protrusion 21 of covering body 16. This space allows vertical movement of, for example, covering body 16.

With gas exhaust unit 12 having the above-mentioned configuration, oxygen gas and hydrogen gas generated on the electrode plates and remaining in cell chamber 8 are exhausted to the outside of the battery through first exhaust path 13, gap 18 and second exhaust path 17 via small chamber 14.

Note here that this exemplary embodiment describes distance x between second protrusion 21 on covering body 16 and drop-off prevention member 19, but distance x is not necessarily limited to this. When covering body 16 does not have second protrusion 21, a distance between the upper part of covering body 16 and drop-off prevention member 19 is defined as distance x.

This exemplary embodiment describes an example in which gap 18 is formed by providing first protrusion 20 on a surface of covering body 16 facing bottom wall 15, but the configuration is not limited to this. For example, first protrusions may be provided discretely on bottom wall 15 facing covering body 16, and first protrusions may be formed discretely on both covering body 16 and bottom wall 15. Furthermore, as shown in an enlarged view of a cross section of a principal part of another example of a lead storage battery shown in Fig. 3, groove portions 15a, which reach at least opening 13a of bottom wall 15 and reach the outer side from the edge of at least covering body 16, may be provided discretely. Furthermore, groove portions exposing to at least the inner side of opening 13a may be provided discretely on covering body 16 at the side in which covering body 16 faces bottom wall 15 in small chamber 14. Furthermore, groove portions may be provided on both of bottom wall 15 and covering body 16.

Note here that in order to remarkably obtain the effect of the present invention, it is preferable that a gas exhaust path is formed such that it is bent by gap 18. This is because the gas generated in cell chamber 8 is exhausted to small chamber 14 while its flow is bent by first protrusion 20 or groove portion 15a in such a way that the gas collides with covering body 16 in the process of being exhausted to the outside of the battery. At that time, electrolytic solution mist and water vapor components contained in the gas are condensed on the surface of covering body 16 to form droplets. The droplets are refluxed into cell chamber 8. As a result, it is possible to suppress the direct exhaust of electrolytic solution mist and water vapor components in cell chamber 8 to the outside of the battery, which occur conventionally, and thus to suppress the reduction amount of the electrolytic solution.

Furthermore, when a battery is charged with a large current in an atmosphere at a high temperature, a large amount of electrolytic solution mist is generated in cell chamber 8 according to the generation of gases. The electrolytic solution mist is condensed on the surface of covering body 16 to form droplets of the electrolytic solution. Then, the droplets of the electrolytic solution temporarily block gap 18 by the surface tension, thus occasionally increasing the internal pressure of cell chamber 8. Also in such a case, however, covering body 16 moves temporarily to the space shown by distance (height) x with the increase in the internal pressure in cell chamber 8, and thereby blocking of gap 18 is opened. Thus, the internal pressure is returned to the atmospheric pressure, and the droplets of the electrolytic solution are refluxed into cell chamber 8 via opening 13a.

At this time, the dimension of gap 18 may be so small as long as the gas in cell chamber 8 can be released in a state in which covering body 16 is mounted on bottom wall 15. For example, in a case where groove portion 15a is formed, the width dimension of groove portion 15a may be set at about 0.5 mm and the depth dimension may be set at about 0.2 mm. Note here that the dimensions are not necessarily limited to this example, and the dimension may be set as long as gap 18 can be secured and the effect of suppressing the reduction of the electrolytic solution can be obtained.

Furthermore, an opening area of opening 13a may be any areas as long as the reflux of the electrolytic solution is not prevented by the interfacial surface tension of the electrolytic solution. For example, opening 13a may have a circle with a diameter of about 5 mm.

Furthermore, this exemplary embodiment describes an example in which drop-off prevention member 19 is a lid-shaped member that covers small chamber 14, but drop-off prevention member 19 is not necessarily limited to this shape. Any configurations or functions may be employed as long as covering body 16 moving in the space in small chamber 14 according to an internal pressure inside cell chamber 8 i s not dropped off from small chamber 14, and the shape is not particularly limited to that shown in Fig. 2.

Furthermore, in order to prevent a state in which covering body 16 adheres to drop-off prevention member 19 by the interfacial surface tension of the electrolytic solution attached to covering body 16 and temporarily covering body 16 is not mounted on opening 13a, as shown in Fig. 2, it is preferable that second protrusion 21 is provided on the surface facing drop-off prevention member 19 on covering body 16. Thus, an effect of suppressing the reduction of the electrolytic solution by covering body 16 can be prevented from being reduced. However, since the adhesion by an electrolytic solution can be solved when the electrolytic solution is dried, second protrusion 21 is not necessarily provided. Note here that since second protrusion 21 is provided to prevent covering body 16 and drop-off prevention member 19 from being brought into surface-contact with each other, second protrusion 21 may be provided on drop-off prevention member 19 side. At this time, it is sufficient that second protrusion 21 is a relatively small protrusion having a diameter of about 1.5 mm and height of about 0.5 mm because it is only necessary to avoid the surface contact between covering body 16 and drop-off prevention member 19.

Furthermore, distance x between covering body 16 and drop-off prevention member 19 can be arbitrarily set as long as covering body 16 can move upward.

Furthermore, the outer diameter of covering body 16 is at least less than the inner diameter of small chamber 14, and has an outer diameter that is large enough to cover opening 13a even if covering body 16 moves to one side in small chamber 14. Thus, as compared with a conventional cap valve in which the dimension of each part has a large influence on the valve pressure, a covering body with less dimension accuracy can be used. Therefore, covering body 16 need not be formed of an expensive resin mold product, and it can be formed by using, for example, a product obtained by punching a polypropylene resin sheet material by using, for example, a punching press for forming the first protrusion or the second protrusion.

According to this exemplary embodiment of the present invention, with the increase in the internal pressure of the battery due to oxygen gas and hydrogen gas generated at the time of charge or self-discharge, the gas inside cell chamber 8 is exhausted into small chamber 14 through gap 18 provided between covering body 16 and opening 13a via first exhaust path 13. Finally, the gas is exhausted to the outside of the battery through second exhaust path 17.

At this time, when the amount of generated gas is small as in, for example, self-discharge of a battery, gas is exhausted to the outside of the battery mainly from gap 18.

On the other hand, when the amount of generated gas is large as at the time of charge of a battery, the gas is rapidly exhausted to the outside of the battery from small chamber 14 through second exhaust path 17 in a state in which covering body 16 floats from opening 13a with an internal pressure and gap 18 is extended.

As mentioned above, according to lead storage battery 1 of this exemplary embodiment, covering body 16 is mounted on opening 13a of bottom wall 15 unlike a valve-regulated lead storage battery in which an opening and closing operation are carried out. A gas exhaust path is provided between cell chamber 8 and the outside of the battery by gap 18 formed by bottom wall 15 and covering body 16. As a result, a difference in the internal pressure among cell chambers 8 is suppressed, variations of the position of the electrolytic solution surface or problems caused thereby can be prevented.

Furthermore, according to this exemplary embodiment, when a battery is charged with a large current, with only exhaust of gases from gap 18, the internal pressure in the cell chamber is momentarily increased. However, covering body 16 moves to the space in the upper part by the increase of the internal pressure in the cell chamber. Thus, the gas is rapidly released from opening 13a. As a result, the increase in the internal pressure in the cell chamber is suppressed, and variations in the pressure among the cell chambers are reduced. This is because variations of a valve opening pressure due to variations of components and materials of a cap valve using the elasticity of rubber, which occurs in a conventional valve-regulated lead storage battery, do not occur.

Furthermore, in a conventional valve-regulated lead storage battery, even if variations of the valve opening pressure are suppressed firstly, variations of the valve opening pressure are enlarged while the battery is charged and discharged or left. However, since this exemplary embodiment has a configuration in which covering body 16 is mounted in a state in which it is brought into contact with bottom wall 15 with the self weight of covering body 16. Therefore, the configuration does not have any elements that make a valve opening pressure vary as in a conventional valve-regulated lead storage battery. Therefore, it is possible to remarkably suppress the variations of the difference in the internal pressure among cell chambers 8.

Furthermore, in this exemplary embodiment, even if a difference in the internal pressure among cell chambers 8 temporarily occurs by charge with a large current, since the amount of generation of gas is reduced when the charge is completed, the generated gas is reliably exhausted via gap 18. Thus, the internal pressures in all cell chambers 8 become atmospheric pressure, so that the difference in the internal pressure among cell chambers 8 is solved. Furthermore, deformation of partition 7 caused by the difference in the internal pressure remaining among cell chambers 8 is not shifted from an elasticity deformation area to a plastic deformation area as in a conventional valve-regulated lead storage battery. As a result, even if partition 7 is deformed, the shape can be returned to the original shape easily. Therefore, it is possible to reduce variations of the position of the electrolytic solution surface and to prevent overflow of the electrolytic solution or corrosion of the strap caused thereby in advance.

Hereinafter, a remarkable effect of the configuration of the lead storage battery of this exemplary embodiment, which cannot be obtained by a conventional valve-regulated lead storage battery, is specifically described.

In a conventional valve-regulated lead storage battery, in general, a valve opening pressure varies between cell chambers adjacent to each other via a partition. Firstly, assume that when a gas is generated, a control valve having a low valve opening pressure is once opened and then closed by a valve closing pressure with the reduction of the internal pressure, and, on the other hand, a control valve having a high valve opening pressure is not opened, and, in this state, a difference in the internal pressure occurs among the cell chambers. Then, assume a lead storage battery used in the environmental atmosphere at 80°C for example, a lead storage battery used for starter.

At this time, by stopping the use, the temperature of the lead storage battery is finally reduced from 80°C to the outside temperature. The volume of the gas in the cell chamber of the lead storage battery is reduced according to the temperature reduction. Then, the difference in the internal pressure further proceeds by the reduction of the internal pressure of the cell chamber. When the difference of the internal pressure is enlarged, with stress generated in the joint portion between the electrolyzer and the lid or the joint portion between the partition and the lid, crack or exfoliation may occur in the joint portion.

On the other hand, in the lead storage battery of this exemplary embodiment, outside air is introduced into cell chamber 8 by gap 18 provided between covering body 16 and bottom wall 15, and finally the internal pressures in all cell chambers 8 become atmospheric pressure. Thus, unlike a conventional valve-regulated lead storage battery, since the lead storage battery of this exemplary embodiment is not affected by change of the internal pressure due to temperature change, it is possible to suppress the concentration of stress on the joint portion between the electrolyzer and the lid, or the joint portion between the lid and partition. Consequently, a lead storage battery with high reliability can be achieved.

Note here that it is preferable that drop-off prevention member 19 is formed of a porous material having a continuous hole. At this time, examples of the porous material include ceramics such as alumina, and a sintered body of an acid-resistant resin such as polypropylene resin particles. Thus, holes in the porous material work as second exhaust path 17 for exhausting the gas generated in small chamber 14 to the outside of the battery. As a result, it is not necessary to particularly provide a through-hole as second exhaust path 17 in drop-off prevention member 19. Furthermore, contamination of foreign matters such as dust and sand into small chamber 14 is suppressed. Furthermore, for example, a porous material having a meandering hole makes it possible to suppress ignition of sparks generated outside the battery to oxygen and hydrogen gases remaining in cell chamber 8.

At this time, the hole diameter of the porous material can be arbitrarily set with considering clogging of foreign matters such as dust and sand, an effect of suppressing penetration of sparks, and penetration speeds of oxygen and hydrogen gases. For example, porous materials having an average hole diameter of several tens to several hundred micron meter can be used for the drop-off prevention member.

### (SECOND EXEMPLARY EMBODIMENT)

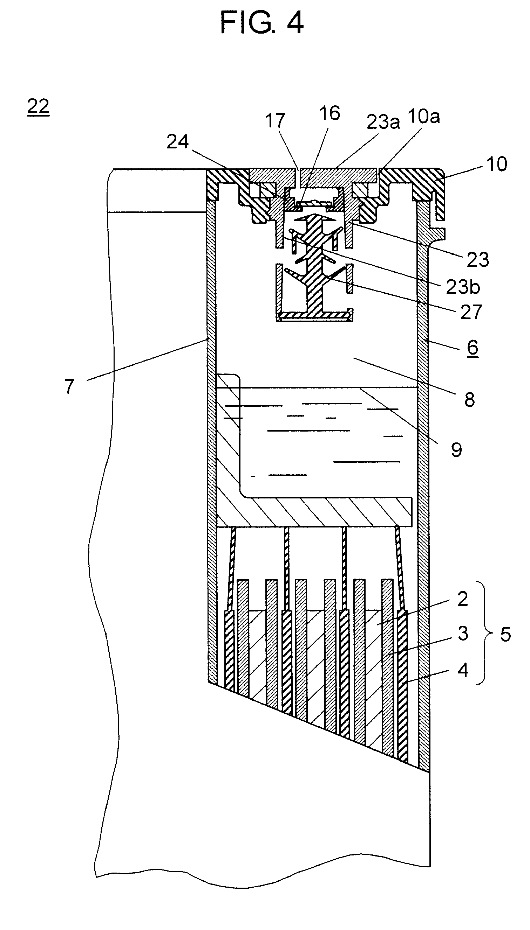

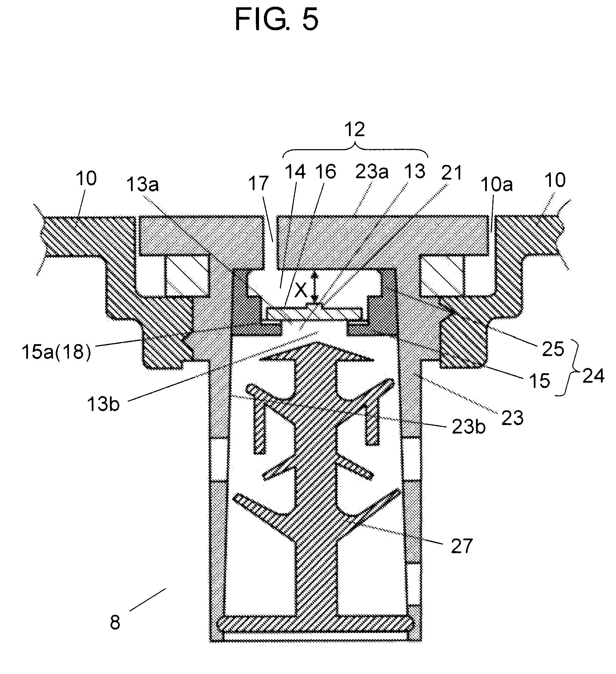

Hereinafter, a lead storage battery in accordance with a second exemplary embodiment of the present invention is described with reference to Figs. 4 and 5.

Fig. 4 is a view showing a cross section of a principal part of a lead storage battery in accordance with the second exemplary embodiment of the present invention. Fig. 5 is an enlarged view showing a cross section of a principal part of a lead storage battery in accordance with the second exemplary embodiment of the present invention.

Lead storage battery 22 in accordance with the second exemplary embodiment of the present invention is different from lead storage battery 1 of the first exemplary embodiment in that gas exhaust unit 12 is disposed in vent plug 23 placed in liquid injection port l0a for injecting liquid provided in lid 10. Note here that the component elements such as positive electrode plate 2, separator 3, negative electrode plate 4, cell 5, electrolyzer 6, partition 7, cell chamber 8, electrolytic solution 9, lid 10 and strap 11 of lead storage battery 22 are the same as those of lead storage battery 1 in the first exemplary embodiment.

Herein, vent plug 23 is composed of cylinder portion 23b and top part 23a inside of which accommodates splash-proof body 27 and gas exhaust unit 12 of this exemplary embodiment. Vent plug 23 is fitted into liquid injection port 10a of lid 10. Note here that splash-proof body 27 is not particularly provided. However, it is preferable that splash-proof body 27 is provided so as to cover opening 13b of small chamber body 24 as shown in Fig. 5 in order to prevent splash of the electrolytic solution from entering into small chamber 14 and to prevent the electrolytic solution from leaking small chamber 14 to the outside of the battery.

As shown in Figs. 4 and 5, gas exhaust unit 12 of this exemplary embodiment includes small chamber body 24 that defines small chamber 14, and covering body 16 accommodated in small chamber 14. Small chamber body 24 is brought into contact with top part 23a of vent plug 23. At this time, top part 23a of vent plug 23 is provided with a through hole as second exhaust path 17. Furthermore, small chamber body 24 is composed of bottom wall 15 and side wall 25 installed upright on bottom wall 15, and bottom wall 15 is provided with opening 13b as first exhaust path 13. Furthermore, with groove portion 15a provided on bottom wall 15 of small chamber body 24, gap 18 is provided between bottom wall 15 and covering body 16. The outer periphery of side wall 25 of small chamber body 24 is placed on the inner wall of cylinder portion 23b of vent plug 23. Furthermore, covering body 16 is mounted so as to cover at least opening 13b of small chamber body 24. At this time, top part 23a of vent plug 23 works as drop-off prevention member 19 for preventing covering body 16 from dropping off from small chamber 14 in accordance with the first exemplary embodiment. Therefore, it is not necessary to additionally provide a drop-off prevention member, thus simplifying the configuration.

Gas exhaust unit 12 configured as mentioned above has the same operation effects similar to those of component elements corresponding to gas exhaust unit 12 of the first exemplary embodiment.

With gas exhaust unit 12 having the above-mentioned configuration, oxygen gas and hydrogen gas generated on electrode plates and remaining in cell chamber 8 are exhausted to the outside of the battery through small chamber 14 via first exhaust path 13, gap 18 and second exhaust path 17.

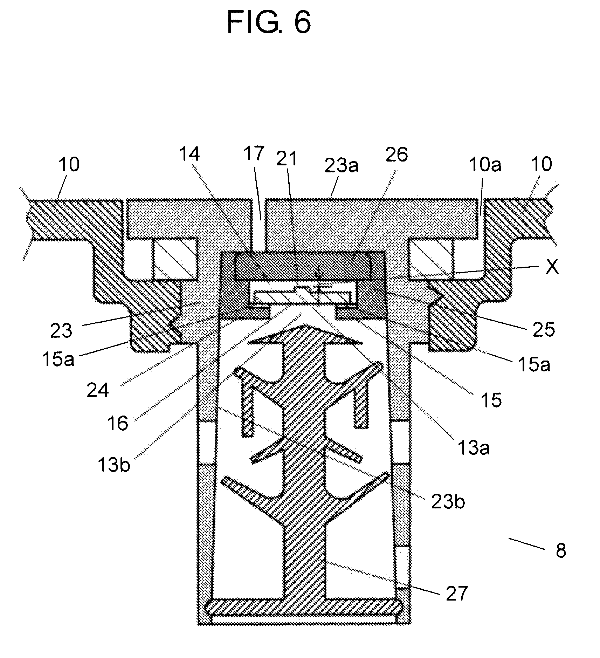

Hereinafter, another lead storage battery in accordance with the second exemplary embodiment of the present invention is described with reference to Fig. 6.

Fig. 6 is an enlarged view showing a cross section of a principal part of another lead storage battery in accordance with the second exemplary embodiment of the present invention.

That is to say, as shown in Fig. 6, filter 26 made of a porous material as described in the first exemplary embodiment is disposed between top part 23a of vent plug 23 and side wall 25 of small chamber body 24. At this time, holes in filter 26 made of a porous material also function as second exhaust path 17, and also function as a drop-off prevention member of covering body 16.

According to the above-mentioned exemplary embodiment, by disposing filter 26 made of a porous material between covering body 16 and second exhaust path 17, it is possible to suppress the entering of foreign matters such as dust and sand into small chamber 14. Therefore, covering body 16 can be operated stably. Furthermore, for example, a porous material having a meandering hole makes it possible to suppress ignition of sparks generated outside the battery to oxygen and hydrogen gases remaining in cell chamber 8.

Similar to lead storage battery 1 of the first exemplary embodiment, lead storage battery 22 in accordance with this exemplary embodiment can suppress the reduction of an electrolytic solution. Furthermore, since the difference of the internal pressure does not occur among cell chambers, deformation of partition 7 caused by the difference of the internal pressure and variations of the position (height) of the liquid surface of the electrolytic solution caused by the deformation can be suppressed. As a result, it is possible to achieve a lead storage battery having excellent reliability in which overflow of an electrolytic solution and corrosion of a strap are suppressed.

Furthermore, according to this exemplary embodiment, since gas exhaust unit 12 is provided in vent plug 23, by detaching vent plug 23, liquid can be injected into cell chamber 8 of lead storage battery 22 via liquid injection port 10a whose inner diameter can be increased. Thus, it is not necessary to inject liquid via first exhaust path 13 having a small inner diameter as in the lead storage battery in accordance with the first exemplary embodiment. Therefore, the lead storage battery of this exemplary embodiment has an advantageous effect that workability such as liquid injection is excellent.

### (THIRD EXEMPLARY EMBODIMENT)

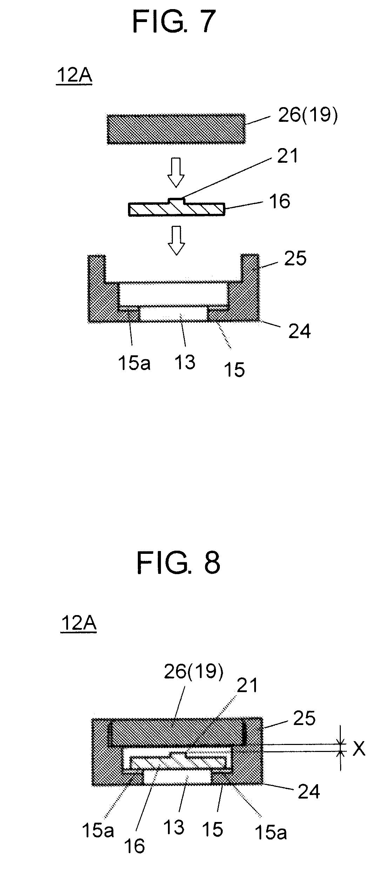

Hereinafter, a lead storage battery in accordance with a third exemplary embodiment of the present invention is described with reference to Figs. 7 and 8.

Fig. 7 is an exploded sectional view showing a configuration of a gas exhaust unit in accordance with the third exemplary embodiment of the present invention. Fig. 8 is a sectional view showing a gas exhaust unit in accordance with the third exemplary embodiment of the present invention.

The third exemplary embodiment of the present invention is different from the second exemplary embodiment in that gas exhaust unit 12 provided in vent plug 23 in the second exemplary embodiment is replaced by gas exhaust unit 12A that is produced as a separate body from vent plug 23 main body.

That is to say, as shown in Figs. 7 and 8, gas exhaust unit 12A is formed by disposing covering body 16 in small chamber body 24 in advance and joining filter 26 made of a porous material, which works as drop-off prevention member 19, on side wall 25 of small chamber body 24. The formed gas exhaust unit 12A is placed in cylinder portion 23b of vent plug 23 as shown in Fig. 6. Thus, vent plug 23 provided with gas exhaust unit 12A is formed.

At this time, joining between small chamber body 24 and filter 26 can be carried out by forming small chamber body 24 and filter 26 of a material having an elasticity, for example, polypropylene resin, polyethylene resin, and the like, and press-fitting and fixing filter 26 to small chamber body 24.

With the above-mentioned configuration, filter 26 made of a porous material can be used as drop-off prevention member 19 for preventing covering body 16 from dropping off and also has a filter function with respect to dust entering from the outside.

According to the lead storage battery of this exemplary embodiment, by placing gas exhaust unit 12A on cylinder portion 23b, the same effect as that of lead storage battery 22 of the second exemplary embodiment shown in Fig. 6 can be obtained.

Furthermore, according to this exemplary embodiment, in addition to the operational effectiveness obtained in the first and second exemplary embodiments, the following operation effects can be obtained.

That is to say, by placing gas exhaust unit 12A provided as a separate body in a vent plug main body used in the existing lead storage battery, a lead storage battery having the effects of the second exemplary embodiment can be obtained easily. Thus, since an existing vent plug and vent plug 23 to be used in the lead storage battery of the third exemplary embodiment can share vent plug 23 main body, it is possible to exhibit a large effect in reducing the production cost by sharing components.

When the outer diameter of small chamber body 24 made of resin having elasticity is made to be slightly larger than the inner diameter of cylinder portion 23b of vent plug 23, gas exhaust unit 12A can be press-fitted and fixed to cylinder portion 23b of vent plug 23. Therefore, as compared with thermal welding, adhesive bonding and other joining methods, a lead storage battery of the present invention can be produced extremely simply and with high productivity.

Note here that as a member constituting gas exhaust unit 12 described in each of the above-mentioned exemplary embodiments, in addition to the above-mentioned polypropylene resin and polyethylene resin, it is possible to use synthetic resin such as a copolymer thereof, which is generally used in an electrolyzer or a lid of a conventional lead storage battery. In particular, it is preferable that when covering body 16 and bottom wall 15 are formed of such a synthetic resin, covering body 16 and bottom wall 15 are prevented from adhering to each other, thus allowing stable operation of covering body 16.

That is to say, conventionally, in a valve obtained by placing a cap-shaped valve made of rubber to a valve cylinder, a cap-shaped valve and a valve cylinder are fixed to each other with a plasticizer contained in rubber, thus making the valve opening and closing pressures unstable. Therefore, in order to reduce the influence of the plasticizer, it is necessary to apply inactive oil such as silicone oil between the cap-shaped valve and the valve cylinder.

However, in the present invention, since the adhesion between covering body 16 and bottom wall 15 as in a conventional lead storage battery does not occur, a process such as application of silicone oil is not necessary. Also in this point, the lead storage battery of the present invention has an excellent productivity as compared with a lead storage battery using a conventional valve.

Herein, specific Examples in the exemplary embodiments of the present invention are described. Examples specifically show the reduction amount of an electrolytic solution, and an effect of suppressing variations in the position of an electrolytic solution surface.

Firstly, lead storage batteries (55B24 battery in a lead storage battery for starting, JIS D5301) for Examples and Comparative Examples of the present invention are produced. Assume that the produced lead storage battery is used by mounting it on a vehicle, charge and discharge are carried out while vibration is applied to each lead storage battery. The reduction amount of the electrolytic solution at this time is evaluated.

### (Example 1)

Example 1 shows a lead storage battery in accordance with the first exemplary embodiment of the present invention. The configuration of a gas exhaust unit in Example 1 is the same as the configuration shown in Fig. 3. At this time, as drop-off prevention member 19, a porous material obtained by sintering polyethylene resin particles is used. Furthermore, two groove portions 15a each having a width of 0.5 mm and a depth of 0.2 mm are formed on the periphery of opening 13a of bottom wall 15 such that the groove portions are disposed on lines passing through the center of opening 13a. This is defined as sample 1.

### (Example 2)

Example 2 shows a lead storage battery in accordance with the third exemplary embodiment of the present invention. The lead storage battery of Example 2 includes gas exhaust unit 12A shown in Fig. 8 in vent plug 23 and filter 26 formed of a porous material functioning as drop-off prevention member 19. At this time, filter 26 is formed by using a porous material made of the same material as drop-off prevention member 19 used in Example 1 and having an average hole diameter of 200 am. Furthermore, two groove portions 15a each having a width of 0.5 mm and a depth of 0.2 mm are formed on the periphery of opening 13a of bottom wall 15 such that the groove portions are disposed on lines passing through the center of opening 13a. Furthermore, splash-proof body 27 is provided inside vent plug 23. Note here that Example 2 shows the lead storage battery in accordance with the third exemplary embodiment of the present invention, but basically it is the same as the lead storage battery in accordance with the second exemplary embodiment. This is defined as sample 2.

### (Example 3)

In Example 3, a lead storage battery is formed the same as in Example 2 except that splash-proof body 27 is not provided. This is defined as sample 3.

### (Comparative Example 1)

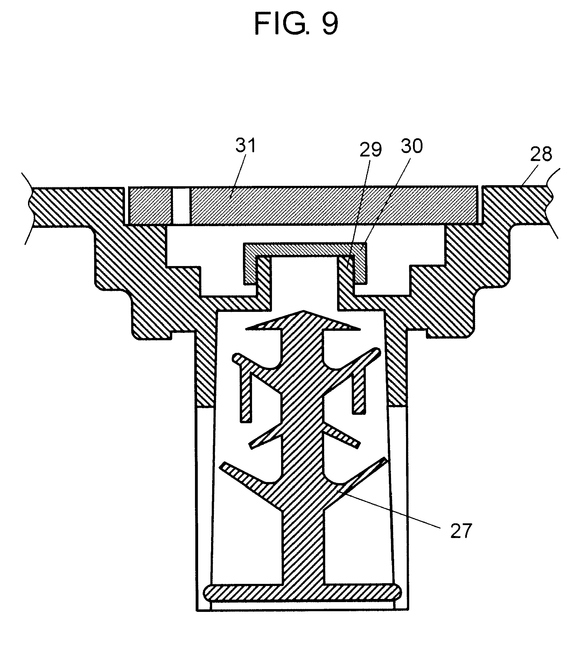

Comparative Example 1 shows a lead storage battery having a conventional gas exhaust unit. Specifically, as shown in Fig. 9, valve cylinder 29 is formed in lid 28 covering an electrolyzer (not shown), and cap-shaped valve body 30 made of rubber is placed on valve cylinder 29 to form a control valve. At this time, in order to prevent cap-shaped valve body 30 from dropping from valve cylinder 29, valve holding plate 31 is fixed to lid 28. Furthermore, in Comparative Example 1, silicone oil is applied between valve cylinder 29 and cap-shaped valve body 30.

Furthermore, in the lower part of valve cylinder 29, splash-proof body 27 similar to Example 2 is disposed. In Comparative Example 1, a designed value of a valve opening pressure is 10.0 kPa and a designed value of a valve closing pressure is 2.0 kPa. Other configurations are the same as those of Example 1. This is defined as sample 1.

### (Comparative Example 2)

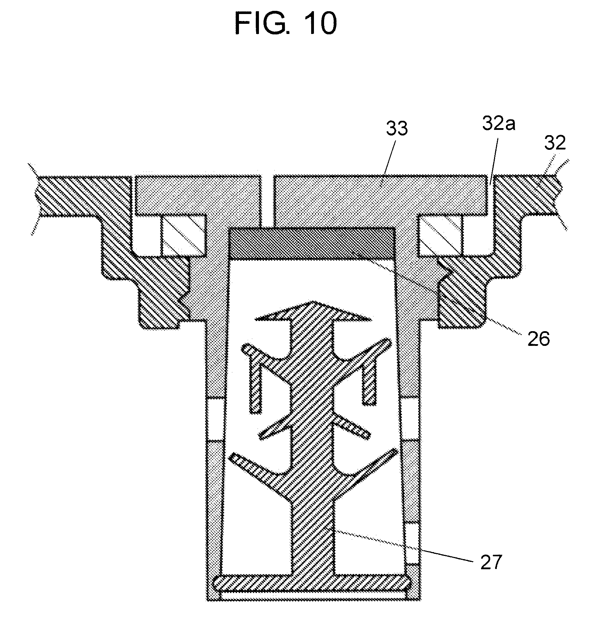

As shown in Fig. 10, Comparative Example 2 shows a lead storage battery in which vent plug 33 provided with filter 26 and splash-proof body 27 is placed to liquid injection port 32a provided in lid 32 covering an electrolyzer (not shown). Other configurations are the same as those of Example 1. This is defined as sample C2.

### (Comparative Example 3)

In Comparative Example 3, a lead storage battery is formed as in Comparative Example 2 except that a splash-proof body is not provided. This is defined as sample C3.

As to lead storage batteries of samples 1 to 3 and samples C1 to C3, the reduction amount of an electrolytic solution and variations of the position of the electrolytic solution surface are evaluated by the following test conditions. At this time, the number of tests of lead storage batteries of samples 1 to 3 and samples C1 to C3 is set at n = 6. The initial position of the electrolytic solution surface is a position at 20 mm above the upper surface of a strap (corresponding to strap 11 in Fig. 1).

Firstly, samples 1 to 3 and samples C1 to C3 are subjected to continuous vertical vibration (acceleration: 1 G (9.8 m/s²) at frequency of 5 to 40 Hz/5min, sweep) in the atmosphere at 75°C. During the sweep period, charge and discharge cycle is carried out 4320 cycles, and one cycle includes discharge (discharge current: 25 A, discharge time: 1 minute) and charge (14.8 V constant-voltage charge, maximum charge current: 25 A, charge time: 25 minutes).

At this time, every 480 cycles in the charge and discharge cycles, the electrolytic solution surface is confirmed and water is supplied so as to return the electrolytic solution surface to the initial position of the electrolytic solution surface, and to always set the position of the electrolytic solution surface at 20 mm above the upper surface of the strap. Then, in each of the lead storage batteries of samples 1 to 3 and samples C1 to C3, a total amount of water that has been supplied during 4320 cycles is defined as the reduction amount of the electrolytic solution.

Next, in each of the lead storage batteries of samples 1 to 3 and samples C1 to C3, in three of six samples, the position of the electrolytic solution surface is set at the initial position state, and in the rest three samples, the position of the electrolytic solution surface is adjusted to the position that is 3 mm above the upper surface of the strap. Then, firstly, each lead storage battery is subjected to 40 cycles of the above-mentioned charge and discharge cycles in the atmosphere at 25°C. Then, similarly, in the atmosphere at 25°C, each lead storage battery is left for 13 days. Thereafter, the maximum value of variations of the position of the electrolytic solution surface in the same battery is measured. At this time, the maximum value of variations of the position of the electrolytic solution surface shows a difference between the maximum position (height) of the electrolytic solution surface and the minimum position (height) of the electrolytic solution surface in six cells constituting each lead storage battery.

Hereinafter, the reduction amounts in each lead storage battery of samples 1 to 3 and samples C1 to C3 after test are shown in Table 1, and the maximum values of the variations of the position of the electrolytic solution surface thereof are shown in Table 2.

**Table 1**

| | Reduction amount of electrolytic solution (kg) |
|---|---|
| Sample 1 | 0.65 |
| Sample 2 | 0.43 |
| Sample 3 | 0.63 |
| Sample C1 | 0.43 |
| Sample C2 | 1.45 |
| Sample C3 | 1.51 |

**Table 2**

| | Position of electrolytic solution surface | Maximum value of variations of position of electrolytic solution surface (mm) | Remark |
|---|---|---|---|
| Sample 1 | 20 mm above upper surface of strap | 2 | Overflow: Not observed |
| | 3 mm above the upper surface of strap | 2 | Strap exposed from electrolytic solution: Not observed |
| Sample 2 | 20 mm above upper surface of strap | 1 | Liquid overflow: Not observed |
| | 3 mm above upper surface of strap | 1 | Strap exposed from electrolytic solution: Not observed |
| Sample 3 | 20 mm above upper surface of strap | 2 | Overflow: Not observed |
| | 3 mm aboveupper surface of strap | 2 | Strap exposed from electrolytic solution: Not observed |
| Sample C1 | 20 mm above upper surface of strap | 15 | Electrolytic solution overflows and remains in valve cylinder base part |
| | 3 mm above upper surface of strap | 16 | Strap exposed from electrolytic solution: Observed |
| Sample C2 | 20 mm above upper surface of strap | 2 | Overflow: Not observed |
| | 3 mm above upper surface of strap | 2 | Strap exposed from electrolytic solution: Not observed |
| Sample C3 | 20 mm above upper surface of strap | 3 | Overflow: Not observed |
| | 3 mm above upper surface of strap | 3 | Strap exposed from electrolytic solution: Observed |

As shown in Table 1, samples 1 to 3 show the effect of suppressing the reduction amount of an electrolytic solution more significantly as compared with samples C1 to C3. Also as compared with sample C1 in which each cell chamber is provided with an opening/closing valve, the reduction amounts of an electrolytic solution in samples 1 to 3 show substantially the same level, showing excellent results.

Furthermore, as shown in Table 2, also regarding the variations of the position of the electrolytic solution surface, variations are remarkably suppressed in samples 1 to 3 as compared with sample C1 provided with a valve. Also in samples 1 to 3, in the lead storage batteries in which the position of the electrolytic solution surface is made to be high (20 mm above the upper surface of the strap), leakage of the electrolytic solution is not observed. Furthermore, in samples 1 to 3, in the lead storage batteries in which the position of the electrolytic solution surface is lowered (3 mm above the upper surface of the strap), the variations of the position of the electrolytic solution surface is remarkably suppressed.

Furthermore, in samples 1 to 3, even in the lead storage batteries in which the position of the electrolytic solution surface is made to be high, overflow or leakage of the electrolytic solution to the outside of the battery is not generated. Furthermore, in the lead storage batteries in which the position of the electrolytic solution surface is lowered, the strap is not exposed from the electrolytic solution.

Furthermore, among samples 1 to 3, sample 2 using a splash-proof body shows particularly remarkable effect of suppressing the reduction amount of the electrolytic solution. This is assumed that the splash-proof body has an effect of remarkably suppressing entering of electrolytic solution mist into a small chamber.

Note here that in sample C1 provided with a valve, the reduction amount of the electrolytic solution is remarkably suppressed, but the variations of the position of the electrolytic solution surface is extremely large. This is thought to be caused by variation in valve opening/closing pressures, and a cell chamber with a high valve opening pressure presses a cell chamber with a low valve opening pressure. That is to say, in the cell chamber with a low valve opening pressure, the volume of the cell chamber is reduced, so that the position of the electrolytic solution surface is made to be high. The cell chamber with a high valve opening pressure is expanded and the volume of the cell chamber is increased, so that the position of the electrolytic solution surface is lowered. Therefore, in sample C1, when the initial position of the electrolytic solution surface is set at 20 mm above the upper surface of the strap, in some cell chambers, the position of the electrolytic solution surface is further raised, and an electrolytic solution is exhausted from the valve cylinder at the same time when the valve is opened, and the exhausted electrolytic solution remains in the base part of the valve cylinder and leaks to the outside of the battery. On the other hand, also in the batteries in which the position of the electrolytic solution surface is set at 3 mm upper from the upper surface of the strap, when it is charged and discharged and is left, the position of the electrolytic solution surface varies. In the cell chamber in which the position of the electrolytic solution surface is low and varies, the strap is exposed from the electrolytic solution surface. Note here that it is not preferable that a strap at the negative electrode side is exposed from the electrolytic solution surface because it is corroded.

As mentioned above, according to the lead storage battery of the present invention, it is possible to achieve a lead storage battery having excellent reliability in which an effect of remarkably suppressing reduction of an electrolytic solution can be obtained and the variations of the position of the electrolytic solution surface is remarkably suppressed. Thus, it is possible to achieve a lead storage battery in which property or effect of a vent-type lead storage battery is enhanced, and the reduction of an electrolytic solution, which is the same level as in a valve-regulated lead storage battery, can be achieved.

### INDUSTRIAL APPLICABILITY

The present invention is suitable for various kinds of vent-type lead storage batteries, for example, lead storage batteries for starting or lead storage batteries for electric-powered vehicles.

## Claims

1. A lead storage battery comprising:
a cell including a positive electrode plate and a negative electrode plate;
a cell chamber accommodating the cell in a state in which electrode plate surfaces of the positive electrode plate and the negative electrode plate are immersed in an electrolytic solution; and
a gas exhaust unit for exhausting a gas generated on the positive electrode plate and the negative electrode plate,
wherein the gas exhaust unit comprises:
a small chamber provided in a battery lid and including a first exhaust path having an opening at the cell chamber side,
a covering body mounted on a bottom wall of the small chamber to cover the opening of the first exhaust path,
a drop-off prevention member provided in an upper part of the small chamber and including a second exhaust path,
a gap formed in at least a part between the bottom wall in a periphery of the opening and the covering body, and
space for allowing movement of the covering body between the covering body and the drop-off prevention member in the small chamber, and
the gas is exhausted to an outside via the first exhaust path, the gap and the second exhaust path.

2. The lead storage battery of claim 1,
wherein the gap is formed by discretely providing first protrusions on at least one of a part of the bottom wall and a part of the covering body on a side in which the bottom wall and the covering body face each other.

3. The lead storage battery of claim 1,
wherein the gap is formed by providing a groove portion that reaches the opening on at least one of a part of the bottom wall and a part of the covering body on a side in which the bottom wall and the covering body face each other.

4. The lead storage battery of claim 1,
wherein a second protrusion is provided on at least one of the covering body and the drop-off prevention member on a side in which the covering body and the drop-off prevention member face each other.

5. The lead storage battery of claim 1,
wherein the gas exhaust unit is provided in a vent plug provided in the battery lid.

6. The lead storage battery of claim 5,
wherein the vent plug includes a cylinder portion of the vent plug, and the gas exhaust unit placed in the cylinder portion of the vent plug, and
the gas exhaust unit includes a small chamber body having a small chamber composed of a bottom wall having a first exhaust path and a side wall installed upright on a periphery of the bottom wall, and an upper part of the side wall is joined to a top part of the vent plug.

7. The lead storage battery of claim 6,
wherein a drop-off prevention member is intervened between the top part of the vent plug and the small chamber body.

8. The lead storage battery of claim 1 or 7,
wherein the drop-off prevention member is made of a porous material.
